# EUROPEAN PATENT APPLICATION

(11) **EP 4 530 184 A1**
(43) Date of publication of application: **02.04.2025**
(21) Application number: 23200188.3
(22) Date of filing: 27.09.2023
(51) Int. Cl.: B64D 9/00, B64C 1/22, B64D 11/00

(54) **STOWAGE IN A REAR SECTION OF AN AIRCRAFT**

(71) Applicant: Airbus Operations GmbH, 21129 Hamburg (DE)
(72) Inventor: Hegenbart, Matthias, Hamburg (DE); Benthien, Hermann, Hamburg (DE)

(57) **Abstract**

The present invention relates to a stowage system for a rear section of an aircraft. In order to provide improved storage for containers on board an aircraft, a stowage system (10) for a rear section of an aircraft is provided. The system comprises a plurality of stowage containers (12), a longitudinal stowage space (14) for receiving a number of the stowage containers and a transport system (16) provided within the stowage space. The transport system is configured to move the stowage containers within the longitudinal stowage space. The longitudinal stowage space is at least partly curved to follow an inner shape of a rear section of a fuselage structure.

## Description

### FIELD OF THE INVENTION

The present invention relates to a stowage system for a rear section of an aircraft, to a cabin for an aircraft, to an aircraft and to a method for providing supply onboard an aircraft.

### BACKGROUND OF THE INVENTION

Aircrafts are used for transporting passengers and cargo. While cargo aircrafts basically provide as much space as possible for the direct use of cargo transport, the use of the available space in passenger aircrafts is a bit more complex. Besides the actual space provided for the passengers, also onboard service functions such as lavatories for passengers and crew member, or galleys for preparing beverages and meals during the flight, have to be integrated within the available cabin space in the fuselage. Movable trolleys or other containers may be used for delivering supply to the aircraft and also for onboard supplying to the passengers. It has been shown that an increasing demand exists for more containers, but the storing of the containers conflicts with the various galley functions.

### SUMMARY OF THE INVENTION

There may thus be a need to provide improved storage for containers on board an aircraft.

The object of the present invention is solved by the subject-matter of the independent claims; further embodiments are incorporated in the dependent claims. It should be noted that the following described aspects of the invention apply also for the stowage system for a rear section of an aircraft, for the cabin for the aircraft and for the method for providing supply onboard an aircraft.

According to the present invention, a stowage system for a rear section of an aircraft is provided. The system comprises a plurality of stowage containers, a longitudinal stowage space for receiving a number of the stowage containers and a transport system provided within the stowage space. The transport system is configured to move the stowage containers within the longitudinal stowage space. The longitudinal stowage space is at least partly curved to follow an inner shape of a rear section of a fuselage structure.

As an effect, the available space within the fuselage is used to an optimum. Space behind lavatories with a curved shape is used to store a plurality of e.g. rectangular containers like trolleys. This is in particular suitable for the rear section of the aircraft with inclined sidewalls. Other functions like galley and lavatory are still possible to be arranged in the rear section though.

According to an example, the longitudinal stowage space is configured to extend from one lateral side of the cabin to the other lateral side of the cabin in a curved manner. In an option, the longitudinal stowage space is configured to follow a concave shape of a bulkhead enclosing the cabin at its rear end in a rear section of a fuselage.

According to an example, in a first option, the transport system is provided in a floor area of the longitudinal stowage space below the stowage containers. In a second option, the transport system is provided in an area of the longitudinal stowage space above the stowage containers. In a third option, the transport system is provided on one of the sidewalls enclosing the longitudinal stowage space laterally of the stowage containers.

According to an example, the transport system comprises a longitudinal drive device along the stowage space.

According to an example, the longitudinal drive device is provided as an actively moving conveyor belt on which the stowage containers are transported. In a first option, the conveyor belt is provided as a continuous longitudinally circulating conveyor band that is moved by a drive. In a second option, the conveyor belt comprises a plurality of actively driven roller bearings which move the stowage containers when arranged on the roller bearings.

According to an example, the longitudinal drive device comprises a passive conveyor strip with a plurality of passive roller bearings on which the stowage containers can be moved by a separate drive.

According to an example, at least one guide rail is provided along at least one of the sides of the longitudinal stowage space for guiding wheels or roller bearings of the stowage containers when moving the stowage containers along the longitudinal stowage space.

According to an example, the longitudinal stowage space is enclosed on its longitudinal side towards a cabin space. The longitudinal stowage space comprises at least one primary loading access on one of its end sections to load and unload the stowage containers.

According to an example, the longitudinal stowage space comprises at least one secondary transferring access on a lateral side facing towards a galley space.

According to an example, the stowage containers are provided as movable racks to receive one or several stowage volumes. The stowage volumes can be extracted from the movable racks separately.

According to the present invention, also a cabin for an aircraft is provided. The cabin comprises a rear section with a curved lateral contour and a stowage system according to one of the preceding examples. The stowage system is provided along the curved contour such that the plurality of stowage containers follows the curved contour when stowed in the longitudinal stowage space.

According to the present invention, also an aircraft is provided. The system comprises a fuselage and a cabin according to the previous example within the fuselage. The rear section of the cabin is arranged in a rear section of the fuselage adjacent to a bulkhead. The longitudinal stowage space is provided at least in front the bulkhead.

According to the present invention, also a method for providing supply onboard an aircraft is provided. The method comprises the following steps:
- Providing a plurality of stowage containers in a longitudinal stowage space that is at least partly curved following an inner shape of a rear section of a fuselage structure of the aircraft; a transport system is provided within the stowage space, the transport system being configured to move the stowage containers within the longitudinal stowage space; and
- Taking at least one of the stowage containers from the stowage space for onboard service.

According to an aspect, a space is provided conforming with a curved inner contour of the fuselage forming a stowage space for a plurality of containers. As the most part of the stowage space is enclosed by lateral side walls towards the cabin space, and also mostly hidden behind lavatories and other monuments, a transport system is provided within the space to move the plurality of the containers.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a stowage system for a rear section of an aircraft.
Fig. 2 shows an example of a cabin for an aircraft.
Fig. 3 shows an example of a longitudinal drive device as a transport system of the stowage system of Fig. 1.
Fig. 4 shows an example of an aircraft with a cabin of Fig. 2.
Fig. 5 shows basic steps of an example of a method for providing supply onboard an aircraft.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

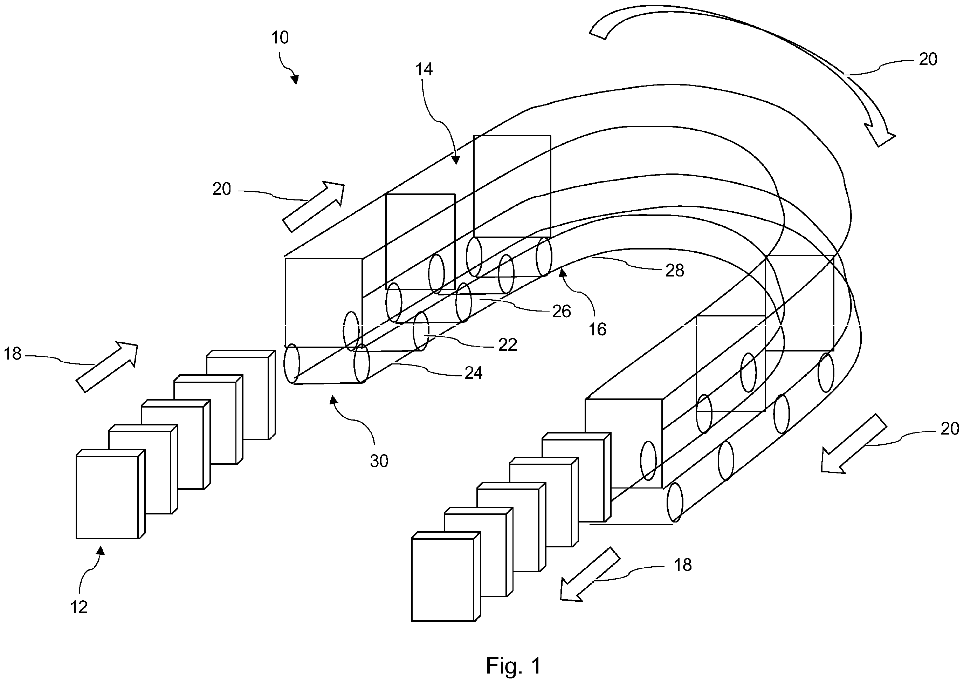

Fig. 1 schematically shows an example of a stowage system 10 for a rear section of an aircraft. The stowage system 10 comprises a plurality of stowage containers 12, a longitudinal stowage space 14 for receiving a number of the stowage containers 12 and a transport system 16 provided within the stowage space 14. The transport system 16 is configured to move the stowage containers 12 within the longitudinal stowage space 14. The longitudinal stowage 14 space is at least partly curved to follow an inner shape of a rear section of a fuselage structure.

First arrows 18 indicate movability of the stowage containers 12 outside the longitudinal stowage space 14. Second arrows 20 indicate movability of the stowage containers 12 inside the longitudinal stowage space 14. It is noted that also an opposite direction of movement of the stowage containers 12 is provided, or a back-and-forth movement.

As an example, the transport system 16 is schematically indicated as wheels 22 and a guide 24.

The stowage system 16 can also be referred to as stowage arrangement.

The term "stowage containers" relates to an enclosure capable of storing items and also suitable for handling and transporting.

The term "longitudinal stowage space" relates to a space provided for stowage purposes, i.e. for temporal storing of stowage containers 12. The space has a longitudinal extension in a ground floor direction. Thus, a plurality of containers can be stored one after the other.

The term "transport system" relates to a system arranged within the stowage space 14 capable of transporting the containers 12 within, i.e. along the stowage space 14.

The term "partly curved" relates to a curved shape in a ground floor setup.

The stowage space is configured for receiving a majority of the plurality of the stowage containers 12.

The stowage space has a constant cross section along its length.

The longitudinal stowage space 14 conforms with the inner contour of the cabin enclosing fuselage structure.

The stowage system 10 provides a stowage container magazine, also referred to as carrier box magazine.

The stowage containers 12 may be half- or full-size trolleys.

The stowage containers 12 may be other containers or boxes.

In an option, the stowage containers 12 are provided for delivering internal boxes for loading of supply onboard the aircraft.

In another option, the stowage containers 12 are provided as oven-like containers for delivering warm food and beverages. In a further option, the stowage containers 12 are provided as fridge-like containers for delivering cold food and beverages. In an option, a mixture of oven-like containers and fridge-like containers is provided.

In an option, a stowage system for a rear section of an aircraft is provided. The system comprises a longitudinal stowage space for receiving a number of stowage containers of a plurality of stowage containers. A transport system is provided within the stowage space. The transport system is configured to move the stowage containers within the longitudinal stowage space. The longitudinal stowage space is at least partly curved to follow an inner shape of a rear section of a fuselage structure.

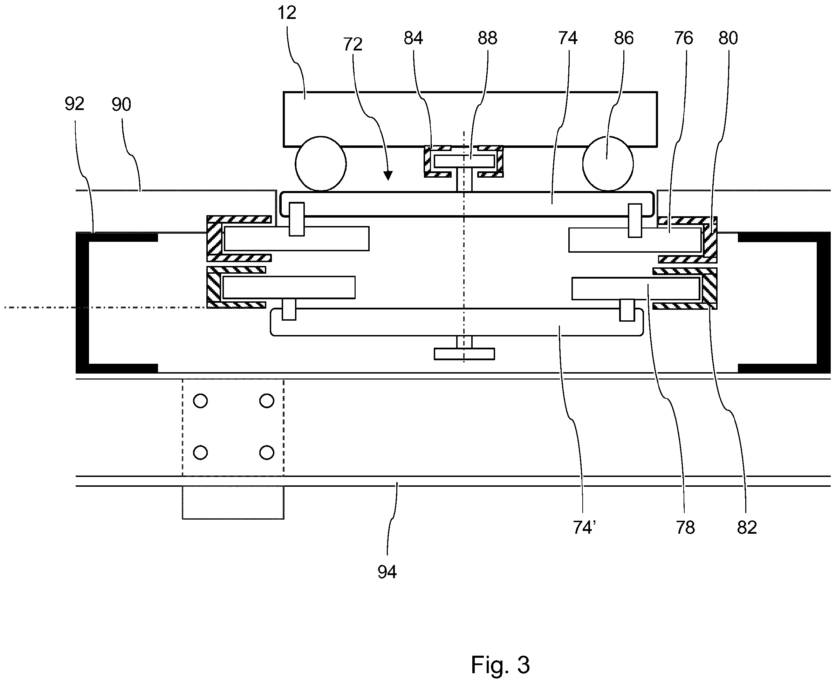

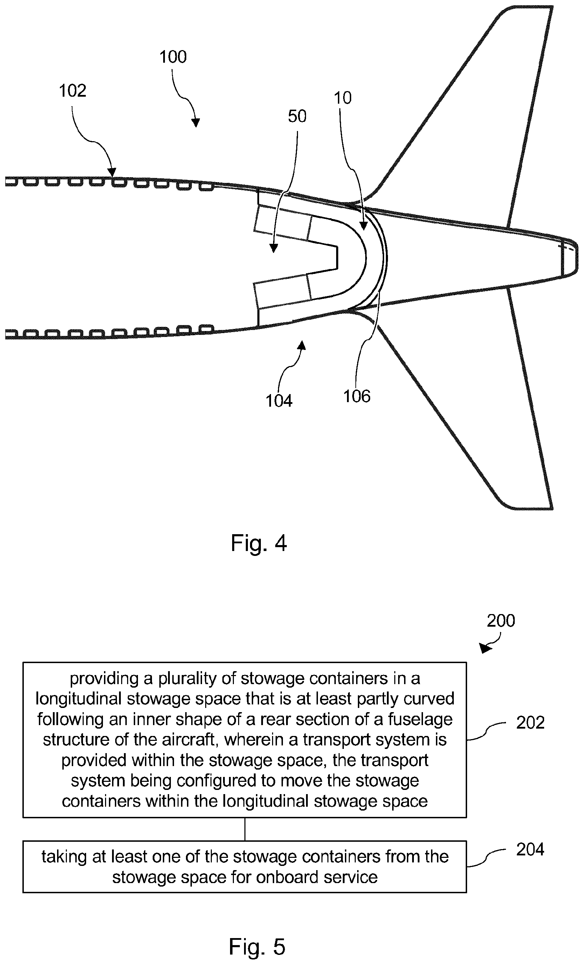

In an option of the example of Fig. 1, the longitudinal stowage 14 space is configured to extend from one lateral side of the cabin to the other lateral side of the cabin in a curved manner. In an option, the longitudinal stowage space 14 is configured to follow a concave shape of a bulkhead (see also Fig.3 and Fig. 4) enclosing the cabin at its rear end in a rear section of a fuselage.

The term "to extend" relates to the space reaching from one lateral side of the cabin to the other lateral side of the cabin. The term "curved manner" relates to the curved form of the space in its extension direction. The term "to follow" relates to a sort of snuggling along the concave inner side of the bulkhead.

The cabin is a space within a fuselage that extends in a longitudinal extension within the fuselage.

In an example, the stowage space is arranged along the bulkhead in an arcuately shaped outline or ground plot.

In another example, the stowage space is arranged along parts of the lateral fuselage walls and the bulkhead in a U-shaped outline or ground plot.

In a first option of the example of Fig. 1, the transport system 16 is provided in a floor area of the longitudinal stowage space below the stowage containers. In a second option of the example of Fig. 1, the transport system 16 is provided in an area of the longitudinal stowage space above the stowage containers. In a third option of the example of Fig. 1, the transport system 16 is provided on one of the sidewalls enclosing the longitudinal stowage space laterally of the stowage containers.

The transport system 16 in the lower floor area may be a conveyor belt, a chain with hooks or catching elements running in or on a rail driven by a motor drive. The transport system 16 in the upper area may be rope like in a cable railway or cable car. The transport system 16 on the sidewalls may be a chain with hooks or catching elements running in or on a rail driven by a motor drive.

In an option of the example of Fig. 1, the transport system 16 comprises a longitudinal drive device 26 along the stowage space.

The term "longitudinal drive device" relates to a drive device that can act on the stowage containers 12 to move along the longitudinal direction. The drive device 26 can provide a continuous interaction with the stowage containers 12 or also repeated separate interaction devices along the longitudinal direction.

In an example, the longitudinal drive device 26 is provided as a longitudinally circulating drive device. The longitudinally circulating drive is arranged as a continuous loop-like element like a conveyor belt or rope of a chairlift.

In an option of the example of Fig. 1, at least one guide rail 28 is provided along at least one of the sides of the longitudinal stowage space 14 for guiding wheels or roller bearings of the stowage containers 12 when moving the stowage containers 12 along the longitudinal stowage space 14.

The term "guide rail" relates to a guide along the longitudinal stowage space for directing the wheels or the containers themselves.

In an example, the transport system 16 comprises a central drive acting on at least one of the stowage containers 12 and coupling devices are provided to link adjacent stowage containers 12 to each other.

In an option of the example of Fig. 1, the longitudinal stowage space 14 is enclosed on its longitudinal side towards a cabin space. The longitudinal stowage space 14 comprises at least one primary loading access 30 on one of its end sections to load and unload the stowage containers 12.

The term "primary loading access" relates to a main opening of the stowage space that serves for loading the containers into the stowage space, e.g. before flight. The primary loading access can also be used for retrieving the containers during flight. The primary loading access can also be used for unloading after flight.

In an example, the primary loading access is provided next to a rear entry area of the aircraft cabin.

In an option, the longitudinal stowage space 14 comprises a second primary loading access on the other one of its end sections.

In an example, the longitudinal stowage space 14 is enclosed on its longitudinal side towards the cabin space by an enclosing sidewall.

In an example, the longitudinal stowage space 14 is enclosed on its longitudinal side towards the cabin space by at least one of the group of an adjacent galley module, an adjacent galley monument, an adjacent lavatory module and an adjacent lavatory monument.

In an option of the example of Fig. 1, the stowage containers 12 are provided as movable racks to receive one or several stowage volumes. The stowage volumes can be extracted from the movable racks separately.

The term "movable rack" relates to a movable base designed for receiving the stowage containers.

The stowage volumes can also be referred to as container boxes.

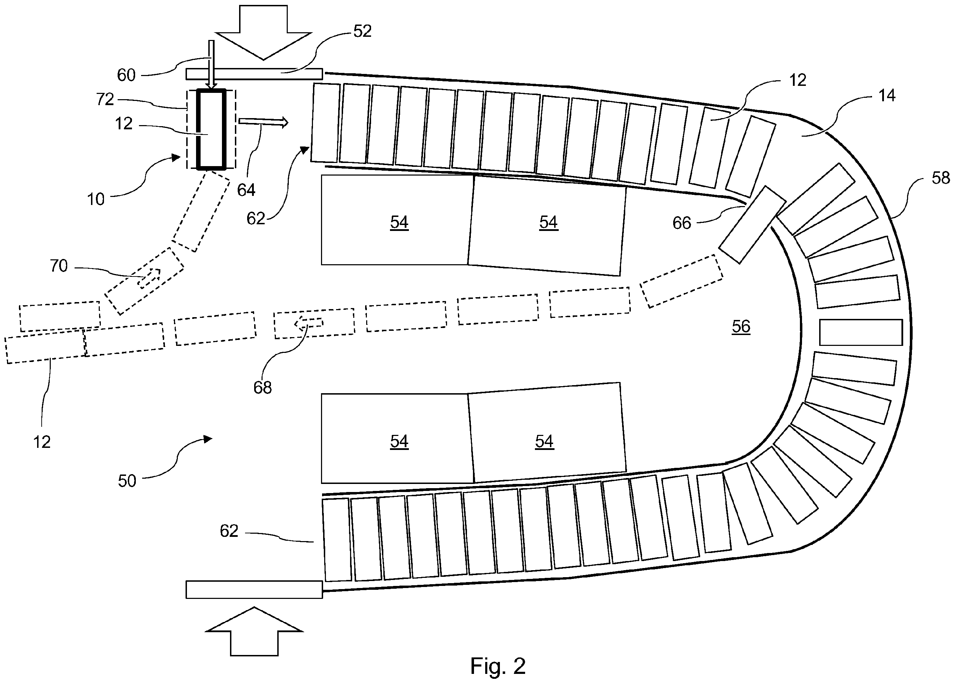

Fig. 2 shows an example of a cabin 50 for an aircraft. The cabin 50 comprises a rear section 52 with a curved lateral contour. The cabin 50 further comprises an example of the stowage system 10 according to one of the preceding examples. The stowage system 10 is provided along the curved contour such that the plurality of stowage containers 12 follows the curved contour when stowed in the longitudinal stowage space 14.

As indicated in Fig. 2, a section of the aircraft aft of rear entry doors 52 is provided as service zone. The stowage system 10 follows a contour of an outer wall. Lavatories 54, or other service units or monuments, may be provided on an inner enclosing side wall of the stowage system 10. A galley space 56, also referred to as galley zone, may be arranged at the rear end of the cabin space (right in Fig. 2). A pressure bulkhead 58 may be arranged adjacent the curved end of the stowage system 10.

The stowage containers 12 can be loaded or supplied via the entry door 52, as indicated with a supply arrow 60. The longitudinal via an opening towage space 14 can then be loaded via a main access 62, e.g. the primary loading access 30 as shown in Fig. 1, as indicated with a loading arrow 64 in Fig. 2. A second loading, i.e. main access 62 can be provided on the other end of the U-shaped stowage space.

The stowage system 10 is provided as a lateral stowage space along an outer wall in a rear section of an aircraft; at least one of the group of lavatory and galley modules is arranged on an inner side of the lateral stowage space.

In an example, the longitudinal stowage space 14 comprises at least one secondary transferring access 66 on a lateral side facing towards the galley space 56.

The stowage containers 12 can then be used for further preparation in the galley space 56. The stowage containers 12 can be used for onboard service, as indicated with a service arrow 68. After use, the stowage containers 12 can be returned to the galley space 56, or, as indicated with a return arrow 70, to the main access for being reinserted in the stowage space 14, or also for further re-supply.

The term "secondary transferring access" relates to a further opening of the stowage space that serves for retrieving content of the containers and to provide the supply for onboard service.

In an option, the secondary transferring access may be provided to unload stowage containers like trolleys for onboard service. The secondary transferring access may be provided along a middle area of the stowage space with regards to its length.

After use, the stowage containers like trolleys can be re-loaded to the stowage space via the primary loading access.

In an option, the secondary transferring access may be provided to unload or load trolleys for onboard service. In another option, the secondary transferring access may be provided for transferring smaller units stored in the stowage containers to trolleys for onboard service.

In an example, the longitudinal stowage space 14 comprises a discharge opening 72 (for example in the entry area, as indicated with a broken line frame, but not further shown in detail) to transfer designated stowage containers 12 to a secondary stowage space (e.g. in a cargo area below the cabin).

The term "discharge opening" relates to an opening suitable for moving the stowage containers out of the stowage space when they are no longer needed, e.g. when their content is used or when they are empty.

The term "secondary stowage space" relates to a storage for the no longer used containers. The secondary stowage space can also be referred to as dump storage. After flight, the no longer used containers can be reused and prepared for reloading.

In an example, the secondary stowage space is provided below a cabin floor, e.g. in a cargo area of an aircraft, and the designated stowage containers are dropped downwards into the secondary stowage space.

Fig. 3 shows an example of a longitudinal drive device 72 as an example of the transport system 16 of the stowage system 10 of Fig. 1. The longitudinal drive device 72 is provided as an actively moving conveyor belt 74 on which the stowage containers 12 are transported. In an option, as shown in Fig. 3, the conveyor belt 74 is provided as a continuous longitudinally circulating conveyor band that is moved by a drive (not shown).

The conveyor belt 74 is running in upper lateral guides 76. For forming an endless conveyor belt, lower lateral guides 78 are provided for the loop 74' of the conveyor belt 74. The upper lateral guides 76 are running in upper bearings 80 and the lower lateral guides 78 are running in lower bearings 82.

Floor panels 90 are further shown supported by support profiles 92 carried by support beams 94.

The stowage containers 12 are indicated with a base frame only.

In another option, not shown in detail, the conveyor belt comprises a plurality of actively driven roller bearings which move the stowage containers when arranged on the roller bearings.

The stowage containers 12 are provided with engagement devices 84 on their lower side. Further, wheels 86 are indicated as an option. To move the stowage containers 12 by the conveyor belt 74, hook devices 88 are provided attached to the conveyor belt 74 configured to engage with the engagement devices 84 of the stowage containers 12 to carry these along on the conveyor belt 74when the conveyor belt 74 is moving.

The term conveyor belt relates to a longitudinal element provided for moving the stowage containers along within the stowage space. The conveyor belt can be an actual belt, such as an elastic band being pulled by drive rolls. The conveyor belt can also be an addition of a plurality of smaller components that in sum result in a similar effect.

In an example, the conveyor band is a flexible conveyor band.

In an example, the conveyor band is provided as a central mono-belt conveyor band.

In another example, the conveyor band is provided as a dual-belt conveyor band, with two laterally arranged conveyor belt stripes to receive a laterally located support structures of the stowage containers.

As an option, coupling interfaces are attached to the conveyor belt to engage with a counterpart attached on a lower side of the stowage container.

In an option not shown in detail, the longitudinal drive device comprises a passive conveyor strip with a plurality of passive roller bearings on which the stowage containers can be moved by a separate drive.

The term "passive conveyor strip" relates to a conveyor that supports a moving along the longitudinal stowage space, but not actively moving the stowage container.

In an option, also not shown in detail, the longitudinal drive device is provided as a chain or rope along the stowage space. Catches are attached to the longitudinal drive device in order to interact with the stowage containers for movement of the stowage containers. The stowage containers are provided with wheels or roller bearings.

The term "catches" relates to interacting devices that push or pull the containers. In an example, the catches are hooks interacting with respective counterparts on the containers. In an example, the catches are cams or pushers that act on wheels or other lower bearings of the containers.

Fig. 4 shows an example of an aircraft 100. The aircraft 100 comprises a fuselage 102 and an example of the cabin 50 according to the examples above within the fuselage 102. The rear section of the cabin 100 is arranged in a rear section 104 of the fuselage adjacent to a bulkhead 106. The longitudinal stowage space is provided at least in front the bulkhead.

Fig. 5 shows basic steps of an example of a method 200 for providing supply onboard an aircraft. The method 200 comprises the following steps:
- In a first step 202, a plurality of stowage containers is provided in a longitudinal stowage space that is at least partly curved following an inner shape of a rear section of a fuselage structure of the aircraft; a transport system is provided within the stowage space, the transport system being configured to move the stowage containers within the longitudinal stowage space.
- In a second step 204, at least one of the stowage containers is taken from the stowage space for onboard service.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A stowage system (10) for a rear section of an aircraft, the system comprising:
- a plurality of stowage containers (12);
- a longitudinal stowage space (14) for receiving a number of the stowage containers; and
- a transport system (16) provided within the stowage space;
wherein the transport system is configured to move the stowage containers within the longitudinal stowage space; and
wherein the longitudinal stowage space is at least partly curved to follow an inner shape of a rear section of a fuselage structure.

2. System according to claim 1, wherein the longitudinal stowage space is configured to extend from one lateral side of the cabin to the other lateral side of the cabin in a curved manner; and
wherein the longitudinal stowage space is configured to follow a concave shape of a bulkhead enclosing the cabin at its rear end in a rear section of a fuselage.

3. System according to claim 1 or 2, wherein the transport system is provided:
i) in a floor area of the longitudinal stowage space below the stowage containers;
ii) in an area of the longitudinal stowage space above the stowage containers; or
iii) on one of the sidewalls enclosing the longitudinal stowage space laterally of the stowage containers.

4. System according to claim 1, 2 or 3, wherein the transport system comprises a longitudinal drive device (26) along the stowage space.

5. System according to claim 4, wherein the longitudinal drive device is provided as an actively moving conveyor belt (74) on which the stowage containers are transported;
wherein the conveyor belt:
i) is provided as a continuous longitudinally circulating conveyor band that is moved by a drive; or
ii) comprises a plurality of actively driven roller bearings which move the stowage containers when arranged on the roller bearings.

6. System according to claim 4 or 5, wherein the longitudinal drive device comprises a passive conveyor strip with a plurality of passive roller bearings on which the stowage containers can be moved by a separate drive.

7. System according to claim 4, 5 or 6, wherein the longitudinal drive device is provided as a chain or rope along the stowage space;
wherein catches are attached to the longitudinal drive device in order to interact with the stowage containers for movement of the stowage containers; and
wherein the stowage containers are provided with wheels or roller bearings.

8. System according to one of the preceding claims, wherein at least one guide rail (28) is provided along at least one of the sides of the longitudinal stowage space for guiding wheels or roller bearings of the stowage containers when moving the stowage containers along the longitudinal stowage space.

9. System according to one of the preceding claims, wherein the longitudinal stowage space is enclosed on its longitudinal side towards a cabin space; and
wherein the longitudinal stowage space comprises at least one primary loading access (30; 62) on one of its end sections to load and unload the stowage containers.

10. System according to one of the preceding claims, wherein the longitudinal stowage space comprises at least one secondary transferring access (66) on a lateral side facing towards a galley space (56).

11. System according to one of the preceding claims, wherein the longitudinal stowage space comprises a discharge opening (72) to transfer designated stowage containers to a secondary stowage space.

12. System according to one of the preceding claims, wherein the stowage containers are provided as movable racks to receive one or several stowage volumes; and
wherein the stowage volumes can be extracted from the movable racks separately.

13. A cabin (50) for an aircraft, the cabin comprising:
- a rear section (52) with a curved lateral contour; and
- a stowage system according to one of the preceding claims;
wherein the stowage system is provided along the curved contour such that the plurality of stowage containers follows the curved contour when stowed in the longitudinal stowage space.

14. An aircraft (100), comprising:
- a fuselage (102); and
- a cabin (50) according to claim 13 within the fuselage;
wherein the rear section of the cabin is arranged in a rear section (104) of the fuselage adjacent to a bulkhead (106); and
wherein the longitudinal stowage space is provided at least in front the bulkhead.

15. A method (200) for providing supply onboard an aircraft, comprising the following steps:
- providing (202) a plurality of stowage containers in a longitudinal stowage space that is at least partly curved following an inner shape of a rear section of a fuselage structure of the aircraft, wherein a transport system is provided within the stowage space, the transport system being configured to move the stowage containers within the longitudinal stowage space; and
- taking (204) at least one of the stowage containers from the stowage space for onboard service.
